# EUROPEAN PATENT SPECIFICATION

(11) **EP 3 960 044 B1**
(45) Date of publication and mention of the grant of the patent: **14.05.2025**
(21) Application number: 20795117.9
(22) Date of filing: 04.03.2020
(51) Int. Cl.: A47J 31/46, B65D 85/804

(54) **CAPSULE FOR INFUSING A BEVERAGE**
KAPSEL ZUR INFUSION EINES GETRÄNKS
CAPSULE POUR L'INFUSION DE BOISSON

(30) Priority: 22.04.2019 ES 201930359
(43) Date of publication of application: 02.03.2022
(73) Proprietor: Cocatech, S.L.U., 28001 Madrid (ES)
(72) Inventor: SALATA, Alberto, 28001 MADRID (ES); BIRIGAY MÍNGUEZ, Miguel, 28001 MADRID (ES); RIVERO MARTÍNEZ, Santiago, 28001 MADRID (ES); OCÓN BERANGO, Rafael, 28001 MADRID (ES)
(74) Representative: Ungria López, Javier
(86) International application number: PCT/ES2020/070158
(87) International publication number: WO 2020/216972

(56) References cited:
- WO-A1-2008/116818
- WO-A1-2009/115475
- WO-A1-2014/033341
- WO-A1-2014/033341
- WO-A1-2016/207456
- CN-A- 105 286 641
- CN-A- 105 286 641
- CN-U- 207 084 700
- CN-U- 207 084 700
- ES-A1- 2 555 631
- ES-T3- 2 709 667
- ES-T3- 2 709 667
- DATABASE WPI Week 45278, Derwent World Patents Index; AN 2017-45278S, RECUPERADO

## Description

### Object of the invention

The capsule for infusing a beverage is configured to be able to be inserted into a machine prepared to inject water into the capsule, flooding the interior space of said capsule, in order to finally obtain a liquid mixture formed by the infusion and the water which will come out through a lower outlet mouth. Starting from this premise, an objective of the invention is to achieve an extraction of the beverage that is progressive and gradual, without the water hammer effect, which results in a smooth extraction, without gushing out or splashing. Furthermore, the capsule of the invention prevents the generation of irregular opening areas from which parts of the material can be detached from parts of the capsule.

### Technical problem to be resolved and background of the invention

At present, beverage preparation capsules are known wherein, after mixing a liquid with a food product such as teas and coffee, said mixture is filtered inside the capsule through a filtering surface.

Capsules for producing beverages are also known which comprise a filter with a filtering surface in the interior space thereof, through which the mixture passes before being extracted to the outside through a lower mouth of the capsule.

Due to the pressure reached inside the food beverage preparation capsule when a liquid is injected therein, the filter tends to destabilise and move internally due to the stresses to which said filter is subjected, which causes abnormal operation inside the capsule.

Another problem that occurs in known capsules is the formation of a crater in the volume of the food product housed inside the capsule when the liquid is injected inside the capsule, such that the formation of said crater creates a channel through which part of the liquid is evacuated directly to the outlet mouth of the capsule with a poor mixture of the tea or coffee; the formation of said crater even being able to cause part of the food product to not be soaked by the liquid injected into the capsule.

Moreover, inside the capsules there is an upper chamber which contains the food product and a lower chamber which may or may not house a filter, such that in some cases both chambers are initially isolated from each other by means of a laminar membrane. In this situation, when water is introduced into the upper chamber, it soaks the food product and at the same time the pressure increases progressively, reaching a moment when the membrane breaks and then the liquid mixture of water and food product reaches the lower chamber, which communicates with an outlet hole through which the mixture is extracted for consumption thereof.

In most cases, the breaking of the membrane is carried out by means of physical contact between the membrane and a sharp element, such as in ES 2260626 T3, such that with the increase in pressure within the upper chamber of the capsule, the membrane moves and comes into contact with the sharp element.

ES 2555631 B2 describes a capsule for preparing a nutritional beverage with a controlled outlet system, wherein a laminar membrane is attached in a first annular area to a perimeter step of a cup structure and in a central second area the laminar membrane is attached to a central plateau. This second central area is concentric with the first annular area; wherein the passage of fluid is through slits of the laminar membrane which open under the effect of the pressure inside the capsule. The laminar membrane breaks due to the increase in pressure inside the upper chamber of the capsule without requiring a sharp element that penetrates the laminar membrane. To do so, the laminar membrane includes specific incisions or notches which constitute weakened areas, and it is through where the membrane finally breaks when the pressure increases sufficiently.

ES 2359284 T3 refers to a capsule of ingredients for beverages which comprises a cup structure including an upper chamber and a lower chamber which are separated by a filter, such that when the pressure increases inside the upper chamber wherein the food substance is located, the liquid mixture (beverage) of water and the food substance passes into the lower chamber through a perimeter gap which is released as a consequence of the increase in pressure in the upper chamber, such that said perimeter gap is delimited between an internal side face of the cup structure and a perimeter part of the filter adjacent to said internal side face. The filter includes direct capillary holes which communicate directly between the upper chamber and the lower chamber.

Document ES 2709667 T3 discloses a cartridge containing a food substance adapted to interact with water injected in the cartridge to produce a food liquid. It comprises a cup having a chamber for holding the food substance and a lid, a puncturable delivery wall that holds the substance in the chamber, a puncturing structure to puncture at least one opening in the delivery wall as a response of water filling the chamber and a collecting area for collecting the liquid passing through the delivery wall in a substantially axial direction placed downstream the puncturable delivery wall and at least one liquid outlet in the collecting area for allowing the liquid to leave the collecting area. The cartridge comprises a support structure comprising at least one support surface configured to support at least one portion of the delivery wall to maintain a flow gap between the puncture structure and the at least one outlet.

WO 2014033341 A1 discloses a capsule for a beverage maker, comprising a container housing a first chamber into which a pressurised fluid is injected. Said first chamber includes holes through which the fluid can pass to a second chamber that contains a product, the fluid being mixed with the edible product. The second chamber comprises perforations through which the fluid can pass to a third chamber that opens into an outlet channel that releases the edible product mixed with the fluid. A frustoconical support defines the base and forms the first chamber, as well as comprising the above-mentioned holes which are covered with an annular body. A plate forms the base of the second chamber and is provided with perforations, said plate, together with the base, forming the third chamber.

### Description of the invention

In order to achieve the objectives and avoid the drawbacks mentioned in the previous sections, the invention proposes a capsule according to any of claims 1-9.

Next, to help better understand this specification and as an integral part thereof, a series of figures is attached in which the object of the invention is depicted in an illustrative and non-limiting manner.

### Brief description of the figures

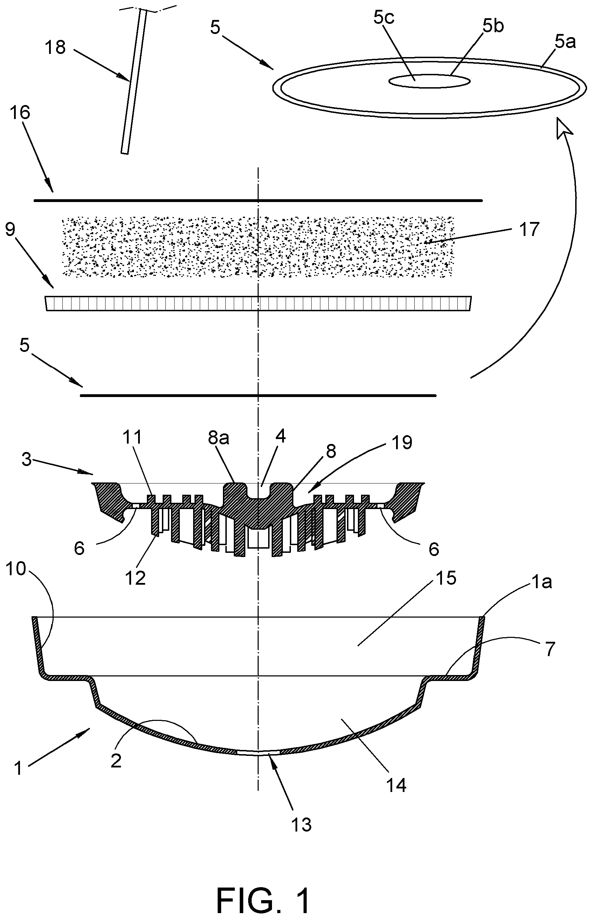

**Figure 1** shows an exploded perspective view of the capsule for infusing a beverage, object of the invention. It basically comprises a cup structure, a laminar membrane and a filter including an upper maze and a lower maze arranged in opposition.

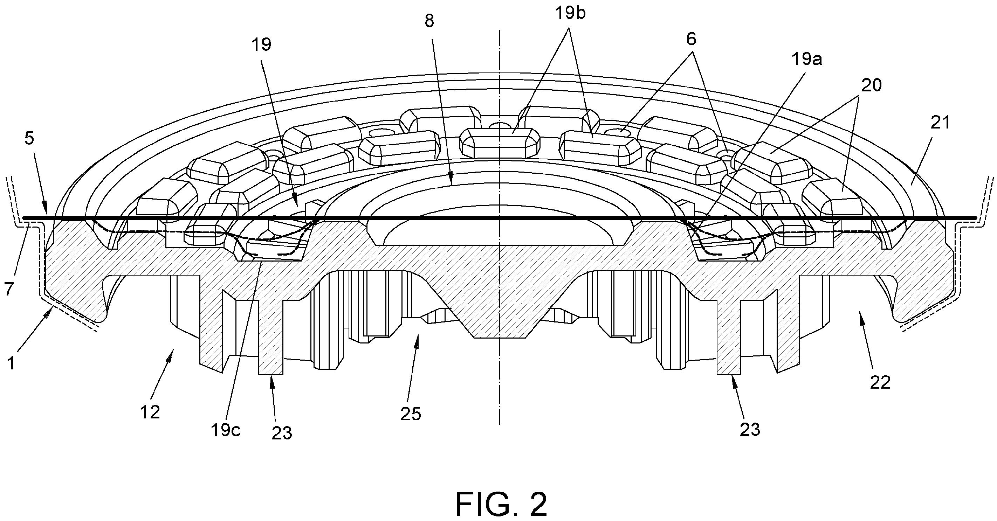

**Figure 2** shows a cross-sectional perspective view of the filter and the laminar membrane which is attached to a central plateau of the filter and to a perimeter step of the cup structure.

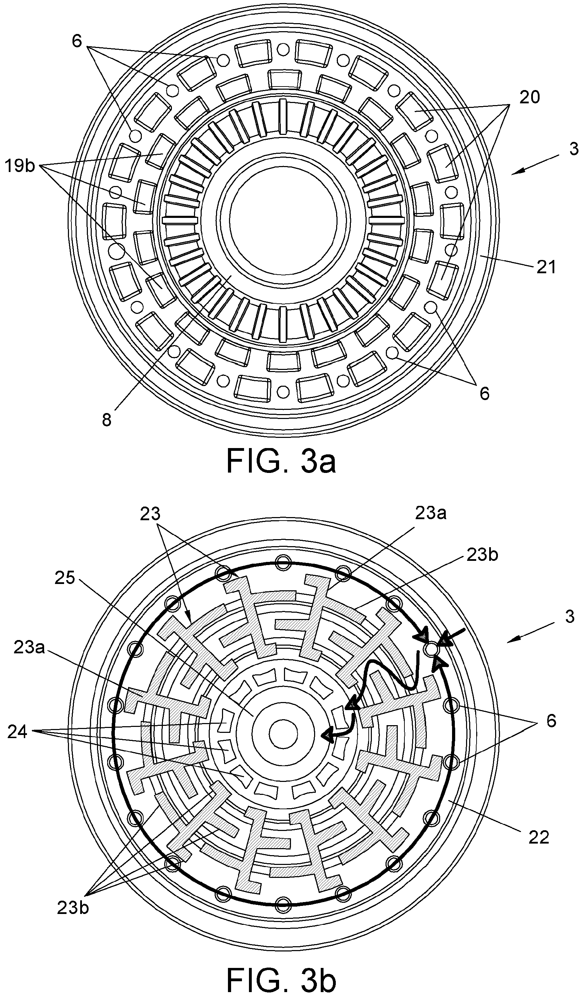

**Figure 3a** represents a plan view of the filter showing the configuration of the upper maze thereof.
**Figure 3b** represents a plan view of the filter showing the configuration of the lower maze thereof.

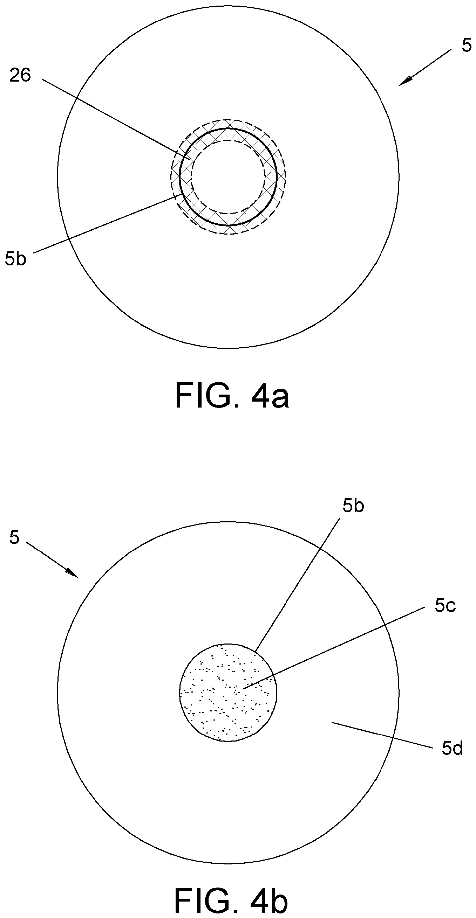

**Figure 4** shows a plan view of the laminar membrane highlighting an annular portion including a weakened portion formed by a continuous circumferential pre-cut.

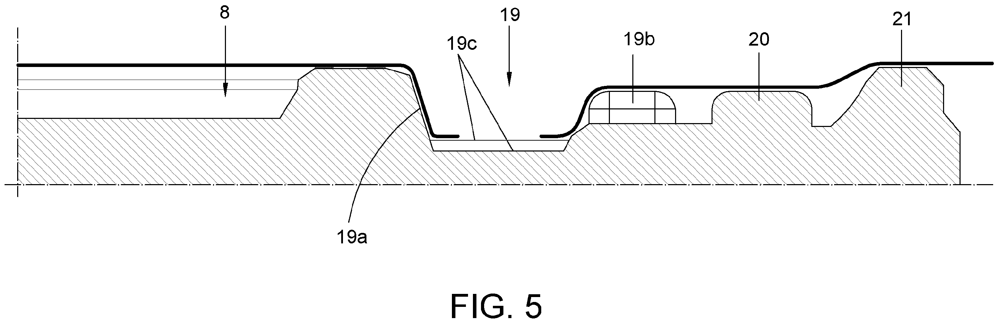

**Figure 5** shows a cross-sectional view of a part of the assembly of the laminar membrane and upper maze of the filter after said laminar membrane breaks due to the pressure exerted by a liquid fluid in a closed space inside the capsule of the invention.

### Description of an exemplary embodiment of the invention

Considering the numbering adopted in the figures, the capsule for infusing a beverage comprises a cup structure 1 with a perimeter step 7, a cover 16, a filter paper 9, a filter 3 and a laminar membrane 5.

The cover 16 is attached by means of sealing on an upper perimeter rim 1a which delimits an opening of the cup structure 1.

The filter 3 is supported on a bottom 2 of the cup structure 1 below the perimeter step 7; wherein said bottom 2 includes an outlet hole 13.

The laminar membrane 5 is attached to the cup structure 1 by means of a first continuous welded attachment which corresponds with an annular area 5a of the laminar membrane 5 welded to the perimeter step 7 of the cup structure 1.

In one embodiment of the invention, the filter paper 9 is attached on a laminar membrane face 5 which is welded to a part of an internal side face 10 of the cup structure 1.

The laminar membrane 5 together with the filter paper 9 separate a lower chamber 14 and an upper chamber 15 of the cup structure 1; wherein the filter 3 is housed in the lower chamber 14, and wherein the upper chamber 15 is configured to house a food substance 17 which will be in contact with the laminar membrane 5 or with the filter paper 9 when the latter element 9 is incorporated.

The laminar membrane 5 is also attached to the filter 3 by means of a second annular welded attachment, which is continuous and central, corresponding to a first internal part 5c by way of a central disc of the laminar membrane 5; wherein an area of said first internal part 5c is welded to a raised central plateau 8 that forms part of the filter 3; and wherein said plateau 8 includes a concentric gap 4.

The laminar membrane 5 includes a continuous circumferential pre-cut 5b which has a diameter greater than the dimension of the contour of the central plateau 8 of the filter 3. Said continuous circumferential pre-cut 5b delimits the area of the first internal part 5c; wherein said continuous circumferential pre-cut 5b is located in a part delimited between the two continuous welded attachments; and wherein the continuous circumferential pre-cut 5b separates the first internal part 5c from a second external part 5d of the laminar membrane 5 including the annular area 5a.

The filter 3 comprises an upper maze 11 and a lower maze 12 opposing one another which are communicated through at least one communicating hole 6 close to the perimeter edge of the filter 5, although in practice it includes a succession of holes 6 located in a circumferential contour.

In one embodiment of the invention, said communicating holes 6 are circular in shape and comprise a measurement delimited between 0.4 mm and 0.8 mm, without ruling out other measurements.

The lower chamber 14 of the capsule wherein the filter 5 is housed constitutes a discharge and filtration chamber, wherein the water mixed with the food substance 17 flows through the spaces and clearance between the upper maze 11 and the lower maze 12, the water with the food substance being filtered and homogenised as it travels from the periphery of the bottom 2 of the capsule to the central part of said bottom 2 wherein the outlet hole 13 is located and through which the liquid mixture (beverage) of water with the food substance 17 will flow out.

After introducing the capsule of the invention into a machine for infusing a beverage, and operating said machine, one end of a cannula 18 of the machine pierces the cover 16 of the capsule and is inserted into a hollow space existing in the upper part of the capsule, above the food substance 17 housed in the upper chamber 15; all this in order to flood said upper chamber 15 with water in a liquid state.

Thus, the food substance 17 occupies a filling space which is complemented with the hollow space wherein the end of the cannula 18 opens, such that the upper chamber 15 comprises the hollow space and the space occupied by the food substance.

The cannula 18 introduces hot water into the upper chamber 15 of the capsule, flooding the interior space of said upper chamber 15; wherein during this operation the hot water is mixed with the food substance 17. As the hot water is being introduced, the pressure inside the upper chamber 15 of the capsule progressively increases.

When the pressure inside the upper chamber 15 of the capsule reaches a certain value, the controlled breaking of the laminar membrane 5 begins in an area of the continuous circumferential pre-cut 5b thereof, and then along the entire closed path of the continuous circumferential pre-cut 5b; whereby communicating the upper chamber 15 and the lower chamber **14** wherein the filter 3 is located.

It should be pointed out that the breaking of the laminar membrane 5 is progressive along the entire path of the continuous circumferential pre-cut, with a continuous annular opening being generated around the central plateau 8. So, with the increase in pressure inside the capsule, the laminar membrane 5 initially breaks at the weakest point of the continuous circumferential pre-cut 5b (laser marked) and then the breaking is progressively completed along the entire path of said continuous circumferential pre-cut 5b.

In this situation, the mixture of water and food substance 17 reaches the lower chamber **14,** inside of which said mixture first goes through the upper maze 11 of the filter 3 from a central area around the plateau 8 to a perimeter area of the filter where the holes 6 are located.

Next, the mixture of water and food substance 17 flows through said holes 6 until it reaches the lower maze 12; wherein the mixture will travel from an exterior perimeter area to a central area of said lower maze 12 until it reaches the centred outlet hole 13 of the bottom 2 wherein the mixture of water and food substance 17 will finally flow out.

As a consequence of the foregoing, the outlet of the liquid beverage through the lower part of the capsule during the beverage extraction process occurs in a gradual manner, without the water hammer effect, which results in a smooth extraction without gushing out or splashing.

Furthermore, a main advantage of the invention is the fact that by means of the continuous circumferential pre-cut 5b of the laminar membrane 5, the shape of the breaking of said laminar membrane 5 is completely controlled as it has a contour with a path closed only by the increase in pressure of the injected water fluid; whereby the laminar membrane 5 is prevented from generating irregular opening areas from which parts of the material of said laminar membrane 5 may become detached or deficient liquid fluid passage areas.

It should be pointed out that after the laminar membrane 5 breaks, it remains attached to the perimeter step 7 and also to the upper base 8a of the central plateau 8.

The laminar membrane 5 comprises a first aluminium layer and a second polyester layer; wherein the first layer is the one which is welded to the perimeter step 7 of the cup structure 1 and to the central plateau 8 of the filter 3.

It should be noted that the double welding in order to attach the laminar membrane 5 forms contour conditions which prevent any movement other than the deformation of the laminar membrane 5 itself.

The laminar membrane 5 is deformed with the pressure exerted by the liquid fluid inside the upper chamber 15, and said laminar membrane 5 being able to be divided into two separate parts, without participating in physical contact with other elements of the capsule through the break area.

In the final manufacturing process of the laminar membrane 5, a section of the second polyester layer is removed (evaporated) by means of a laser; wherein said section corresponds to the continuous circumferential pre-cut 5b wherein only the aluminium material of the first layer remains.

Removing the polyester material from a specific area reduces the mechanical capabilities of the laminar membrane 5 in a precise manner which is designed to break along the area etched with the laser.

Under the pressure of the liquid fluid inside the upper chamber 15 of the cup structure 1, the laminar membrane 5 accommodates and adapts to the surfaces of the filter 3; wherein said surfaces correspond with contact areas of elements of the upper maze 11 and with contact areas of the side contour of plateau 8 of the filter 3.

Under the pressure of the liquid fluid, the adaptation of the laminar membrane 5 on the aforementioned elements of the filter 3 causes sectors with different deformations to be differentiated, such that in this situation the laminar membrane 5 is subjected to a tension in the entirety of the extension thereof, which having reached the moment of maximum deformation and tension, the laminar membrane 5 will break at the weakest part thereof, which is precisely the area wherein the continuous circumferential pre-cut 5b has been previously made, wherein only the aluminium material of the first layer remains.

Thus, at the point of maximum deformation and stress of the laminar membrane 5, the breaking thereof occurs in coincidence with the weakened portion of the continuous circumferential pre-cut 5b, such that the weakened properties of the aluminium material of the first layer produce a controlled break at a specific pressure of the liquid fluid within the upper chamber 15 without mechanical contact.

Analysing the type of break of the laminar membrane, under the theory for the strength of materials and structures, the elongation prior to the laminar membrane 5 breaking causes a tensile stress therein. This stress increases proportionally with the deformation, until the maximum tensile strength of the first aluminium layer is reached (in the area of the continuous circumferential pre-cut 5b with laser) and causes the laminar membrane 5 to break; always without mechanical contact with other elements or coupling in the break area.

In order to always have the same opening of the capsule, in a controlled and delimited manner, the continuous circumferential pre-cut 5b has been designed in the laminar membrane 5.

It should be noted that in order to carry out the opening of the capsule, the continuous circumferential pre-cut 5b does not have a beginning or an end. In contrast, other conventional linear slits have a final segment which is susceptible and sensitive to the concentration of stresses, the appearance of uncontrolled cracks possible due to the deformation of the laminar membrane including said linear slits.

The continuous circumferential pre-cut 5b is a geometry without a beginning or an end, wherein, once the break of the laminar membrane 5 has started, it extends through the area weakened by the laser, producing the total breaking of the first aluminium layer into two sections. This effect includes a self-conclusive effect, without the possibility of the weakened areas of the aluminium layer being in contact with other parts of the capsule before breaking.

The aluminium layer is designed to break without mechanical contact or coupling with other areas of the capsule, but only participating in the deformation and tensile stress due exclusively to the pressure generated by the liquid fluid inside the upper chamber 15 of the cup structure 1.

In order to facilitate the controlled breaking operation, the filter 3 includes an annular valley 19 around the central plateau 8 on the base 8a of which the first interior part 5c of the laminar membrane 5 is welded; wherein said annular valley 19 is facing an annular portion 26 of the laminar membrane 5 wherein the continuous circumferential pre-cut 5b is located.

The annular valley 19 is delimited by two collateral support areas of the filter 3 which will act as support for the first aluminium layer of the laminar membrane 5, but without an attachment between the filter 3 and the first aluminium layer in said support areas.

The annular valley 19 limits and defines the span over which the elongation (stretching) of the first aluminium layer will be carried out; wherein the continuous circumferential pre-cut 5b of the laminar membrane 5 is facing said span of the annular valley 19.

The annular valley 19 is the empty space over which the first aluminium layer of the laminar membrane 5 is deformed to the breaking point thereof along the continuous circumferential pre-cut 5b of said laminar membrane 5.

The filter 3 has a geometry which limits the excess deformation of the laminar membrane 5 and maintains open surfaces through which the beverage can flow through the upper maze 11, such that once the first aluminium layer has been opened due to the breaking thereof, always in a foreseen delimited area (annular portion 26 of the laminar membrane 5), the beverage can flow through the upper maze 11, as previously referred to.

The annular valley 19 of the filter 3 is delimited by a continuous side face 19a, side areas of a succession of projections 19b parallel to the continuous side face 19a and a stepped bottom 19c; wherein said continuous side face 19a forms part of the central plateau 8 of the filter. The stepped bottom 19c is formed by a succession of recesses separated by radial partitions.

The upper maze 11 further includes a succession of additional projections 20 with a circumferential path having a greater diameter than the circumferential path of the other succession of projections 19b. Said upper maze 11 also includes a continuous perimeter projection 21 with a circumferential path having a greater diameter than the circumferential path of the additional projections 20. Between the additional projections 20 there are separation gaps corresponding to intermediate areas wherein the holes 6 communicating the upper maze 11 and the lower maze 12 are located.

Once the laminar membrane 5 has been broken in a controlled manner along the continuous circumferential pre-cut 5b thereof, the first interior part 5c and the second exterior part 5d of said laminar membrane 5 are physically separated, such that the adjacent portions of both parts 5c, 5d bend towards the interior space of the annular valley 19 until they make contact with the continuous side face 19a thereof, with the side areas thereof of the succession of projections 19b and also with a part of the stepped bottom 19c thereof.

Once the laminar membrane 5 breaks, the geometry of the stepped bottom 19c of the annular valley 19, in the direction of the escape of the liquid beverage, maintains flow cross-sections at the limits of the annular valley 19 open, preventing the complete closure of the upper maze 11 of the filter.

A grated surface of the upper maze 11 of the filter 3 makes contact with the first aluminium layer of the laminar membrane 5 separated into two parts once it has already been broken by the continuous circumferential pre-cut 5b; wherein said upper maze 11 does not participate in the opening, but in controlling the extraction of the beverage.

One of the problems associated with the manageability of capsules for the infusion of beverages is the initial impact of the front of the liquid flow when leaving the capsule, caused by the high pressure at which the infused beverage is formed.

In order to prevent said effect of the initial impact of the front of the liquid flow at the outlet of the capsule, the filter 3 has been designed, which is divided into sections with different utilities, such that the upper maze 11 is responsible for expanding the beverage from the annular valley 19 to the area wherein the holes 6 communicating the upper maze 11 and the lower maze 12 are located, while the lower maze 12 is responsible for concentrating the beverage, reducing and smoothing the speed and/or pressure thereof, and centralising the extraction through the outlet hole.

The lower maze 12 includes an exterior channel 22 wherein the holes 6 communicating the upper maze 11 and the lower maze 12 open; wherein said holes 6 are located between the additional projections 20 of the upper maze 11; and wherein said exterior channel 22 is an unobstructed space connecting all the communicating holes of both mazes 11, 12.

The exterior annular flow cross-section of said exterior channel 22 of the lower maze 12 distributes the liquid beverage along the entire annular path of the exterior channel 22, homogenising the flow of the liquid beverage before proceeding to the next step.

An intermediate radial flow cross-section of the lower maze 12 is delimited by a succession of intermediate crenellated barriers 23 which form passages with sudden changes in direction. These passages in different directions force the liquid beverage to reduce the speed and pressure thereof as it flows into the outlet hole 13.

Said intermediate barriers 23 comprise a set of radial partitions 23a in combination with arched partitions 23b arranged in opposition which follow a circumferential path; wherein said arched partitions 23b are attached by one of the ends thereof to both sides of the radial partitions 23a.

An interior flow cross-section of the lower maze 12 is delimited by an internal barrier formed by projections **24** which follow a circumferential path, and which in turn surround a centred chamber 25 facing the outlet hole 13.

The interior flow cross-section is also configured to reduce the speed of the liquid, distribute the beverage homogeneously in the outlet hole 13 and limit the size of the bubbles.

Finally, the flow cross-section of the outlet hole 13 concentrates the liquid beverage again, once it has lost the speed and pressure in order to form the only outlet of the capsule through said outlet hole 13.

At the outlet of the lower maze 12, the liquid has a vector which does not point towards the outlet of the capsule, but rather forces the beverage to be distributed throughout the inside of the centred chamber 25. This movement can generate an outlet of the capsule with a helical path of the liquid beverage. In order to prevent this excessive movement, the intermediate barriers 23 are properly oriented at the outlet of the lower maze 12, such that the different streams of liquid fluid running through the passages of the intermediate barriers 23, before reaching the centred chamber 25, said currents collide with the projections **24** of the internal barrier.

Additionally, the internal barrier limits the quality of the cream, preventing the generation of large bubbles.

With this described arrangement, when the capsule of the invention is to be used, water is introduced with the cannula 18 into the upper chamber 15, flooding all of it and soaking the food substance 17 that is located inside said upper chamber 15, such that as more water is introduced, the pressure therein progressively increases; reaching a moment when the laminar membrane 5 starts to break along a point of the continuous circumferential pre-cut 5b thereof.

In this situation, the laminar membrane 5 is progressively and slowly torn until the entire path of said continuous circumferential pre-cut 5b is completed. From the moment when the laminar membrane 3 starts to break, the mixture of water with the food substance 17 reaches the annular valley 19 of the upper maze 11 of the filter 3, and then travels expanding (below the laminar membrane 5) in radial directions in the upper maze 11 through the gaps between the projections 19b and the gaps between the additional projections 20, until it reaches the holes 6 communicating the upper maze 11 and the lower maze 12, wherein said holes 6 open into the channel 22 of said lower maze 12.

Finally, the liquid mixture will travel through the lower maze 12 concentrating towards the centre thereof through the intermediate radial flow cross-section and interior cross-section thereof until it reaches the centred chamber 25 and from here the liquid mixture will run through the outlet hole 13 located in the bottom 2 of the cup structure 1.

## Claims

1. A **capsule for infusing a beverage,** comprising:
- a cup structure (1) including an opening closed by means of a cover (16);
- a filter (3) resting on a bottom (2) of the cup structure (1) under a perimeter step (7) of the cup structure (1); wherein said bottom (2) includes an outlet hole (13) of the beverage;
- a laminar membrane (5) separating a lower chamber (14) from an upper chamber (15) of the cup structure (1); wherein the filter (3) is in the lower chamber (14), and wherein the upper chamber (15) is configured to house a food substance (17);
wherein the laminar membrane (5) is attached to the cup structure (1) by means of a first sealed attachment coinciding with an annular area (5a) of the laminar membrane (5) welded to the perimeter step (7) of the cup structure (1); and wherein the filter (3) comprises an upper maze (11) and a lower maze (12) arranged in opposition and communicating with each other through holes (6) close to the exterior contour of the filter (3); wherein the upper maze (11) is in contact with the laminar membrane (5) and the lower maze (12) is in contact with the bottom (2) of the cup structure (1);
**characterised in that**:
- the laminar membrane (5) is attached to the filter (3) by means of a second central sealed attachment coinciding with a first internal part (5c) of the laminar membrane (5) which is welded to an area of a central plateau (8) that forms part of the filter (3); whereinthe laminar membrane (5) includes a continuous circumferential pre-cut (5b) which has a diameter greater than the dimension of the contour of the central plateau (8) of the filter (3);
- the continuous circumferential pre-cut (5b) is located in an annular portion (26) of the laminar membrane (5) facing an annular valley (19) located in the upper maze (11) of the filter (3) and forming a closed path to generate a continuous annular opening around the central plateau (8); wherein the annular valley (19) has a span and said annular portion (26) is located in the span of the annular valley (19); and wherein said annular portion (26) rests on two parallel collateral areas on supports which delimit the opening of the annular valley (19);
wherein once the laminar membrane (5) breaks along the continuous circumferential pre-cut (5b) thereof, the beverage flows expanding in the upper maze (11) from the annular valley (19) to the holes (6) and concentrating in the lower maze (12) towards the outlet hole (13).

2. **The capsule for infusing a beverage,** according to claim 1, **characterised in that** the continuous circumferential pre-cut (5b) delimits the area of the first internal part (5c) of the laminar membrane (5).

3. **The capsule for infusing a beverage,** according to any one of the preceding claims, **characterised in that** the annular valley (19) of the filter (3) is delimited by a continuous side face (19a), side areas of a succession of projections (19b) parallel to the continuous side face (19a) and a stepped bottom (19c); wherein said continuous side face (19a) forms part of the central plateau (8) of the filter (3); and wherein the supports of the annular portion (26) of the laminar membrane (5) are located in the central plateau (8) and in the succession of projections (19b).

4. **The capsule for infusing a beverage,** according to claim 3, **characterised in that** the stepped bottom (19c) of the annular valley (19) is formed by a succession of recesses separated by radial partitions.

5. **The capsule for infusing a beverage,** according to any one of the preceding claims 3 or 4, **characterised in that**:
- the upper maze (11) of the filter (3) comprises the succession of projections (19b) distributed in a circumferential path around the central plateau (8); a succession of additional projections (20) with a circumferential path having a greater diameter than the circumferential path of the other succession of projections (19b); and a continuous perimeter projection (21) having a circumferential path greater than the circumferential path of the additional projections (20);
- the lower maze (12) of the filter (3) comprises an intermediate radial flow cross-section which is delimited by a succession of intermediate crenellated barriers (23) which form passages with sudden changes in direction; an interior flow cross-section which is delimited by an internal barrier formed by projections (24) which follow a circumferential path and which in turn surround a centred chamber (25) facing the outlet hole (13) of the bottom (2) of the cup structure (1).

6. **The capsule for infusing a beverage,** according to claim 5, **characterised in that** the lower maze (12) includes an exterior channel (22) wherein the holes (6) communicating the upper maze (11) and the lower maze (12) open; wherein said holes (6) are located between the additional projections (20) of the upper maze (11); and wherein said exterior channel (22) is an unobstructed space connecting all the communicating holes (6) of both mazes (11, 12).

7. **The capsule for infusing a beverage,** according to any one of the preceding claims 5 or 6, **characterised in that** the intermediate crenellated barriers (23) of the lower maze (12) comprise radial partitions (23a) in combination with opposing arched partitions (23b) which follow a circumferential path parallel to the circumferential path of the exterior edge of the filter (3); wherein said arched partitions (23b) are attached by one of the ends thereof to sides of the radial partitions (23a).

8. **The capsule for infusing a beverage,** according to any one of the preceding claims, **characterised in that** the laminar membrane (5) comprises a first aluminium layer and a second polyester layer integrally attached together by two of the faces thereof; wherein the continuous circumferential pre-cut (5b) of the laminar membrane (5) is included in the second polyester layer with interruption of the entire thickness thereof; and wherein the laminar membrane (5) is attached to the filter (3) and the cup structure by means of the first aluminium layer.

9. **The capsule for infusing a beverage,** according to any one of the preceding claims, **characterised in that** it comprises a filter paper (9) which is welded to a part of an internal side face (10) of the cup structure (1); wherein said filter paper (9) is in contact with the laminar membrane (5).

## Patentansprüche

1. Kapsel zum Aufbrühen eines Getränks, umfassend:
- eine Becherstruktur (1) mit einer Öffnung, die mithilfe eines Deckels (16) verschlossen ist;
- einen Filter (3), der auf einem Boden (2) der Becherstruktur (1) unter einer Umfangsstufe (7) der Becherstruktur (1) ruht; wobei der Boden (2) ein Auslassloch (13) für das Getränk enthält;
- eine laminare Membran (5), die eine untere Kammer (14) von einer oberen Kammer (15) der Becherstruktur (1) trennt; wobei sich der Filter (3) in der unteren Kammer (14) befindet, und
wobei die obere Kammer (15) dazu konfiguriert ist, eine Lebensmittelsubstanz (17) aufzunehmen; wobei die laminare Membran (5) an der Becherstruktur (1) mithilfe einer ersten abgedichteten Befestigung befestigt ist, die mit einem ringförmigen Bereich (5a) der laminaren Membran (5) zusammenfällt, der mit der Umfangsstufe (7) der Becherstruktur (1) verschweißt ist; und wobei der Filter (3) ein oberes Labyrinth (11) und ein unteres Labyrinth (12) umfasst, die einander gegenüberliegend angeordnet sind und durch Löcher (6) nahe der Außenkontur des Filters (3) miteinander in Verbindung stehen; wobei das obere Labyrinth (11) in Kontakt mit der laminaren Membran (5) steht und das untere Labyrinth (12) in Kontakt mit dem Boden (2) der Becherstruktur (1) steht;
**dadurch gekennzeichnet, dass**:
- die laminare Membran (5) an dem Filter (3) mithilfe einer zweiten zentralen abgedichteten Befestigung befestigt ist, die mit einem ersten inneren Teil (5c) der laminaren Membran (5) zusammenfällt, der mit einem Bereich eines zentralen Plateaus (8) verschweißt ist, das einen Teil des Filters (3) bildet; wobei die laminare Membran (5) einen durchgehenden Umfangsvorschnitt (5b) enthält, welcher einen Durchmesser aufweist, der größer ist als die Abmessung der Kontur des zentralen Plateaus (8) des Filters (3);
- der durchgehende Umfangsvorschnitt (5b) in einem ringförmigen Abschnitt (26) der laminaren Membran (5) angeordnet ist, der einem ringförmigen Tal (19) zugewandt ist, das sich in dem oberen Labyrinth (11) des Filters (3) befindet und einen geschlossenen Weg bildet, um eine durchgehende ringförmige Öffnung um das zentrale Plateau (8) herum zu erzeugen; wobei das ringförmige Tal (19) eine Spannweite hat und der ringförmige Abschnitt (26) in der Spannweite des ringförmigen Tals (19) angeordnet ist; und wobei der ringförmige Abschnitt (26) auf zwei parallelen seitlichen Bereichen auf Trägern ruht, die die Öffnung des ringförmigen Tals (19) begrenzen;
wobei, sobald die laminare Membran (5) entlang ihres durchgehenden Umfangsvorschnitts (5b) reißt, das Getränk sich oberen Labyrinth (11) ausbreitet, vom ringförmigen Tal (19) zu den Löchern (6) fließt und sich im unteren Labyrinth (12) zum Auslassloch (13) hin konzentriert.

2. Kapsel zum Aufbrühen eines Getränks nach Anspruch 1, **dadurch gekennzeichnet, dass** der durchgehende Umfangsvorschnitt (5b) den Bereich des ersten inneren Teils (5c) der laminaren Membran (5) begrenzt.

3. Kapsel zum Aufbrühen eines Getränks nach einem der vorhergehenden Ansprüche, **dadurch gekennzeichnet, dass** das ringförmige Tal (19) des Filters (3) durch eine durchgehende Seitenfläche (19a), Seitenbereiche einer Folge von Vorsprüngen (19b), die parallel zu der durchgehenden Seitenfläche (19a) verlaufen, und einen abgestuften Boden (19c) begrenzt ist; wobei die durchgehende Seitenfläche (19a) einen Teil des zentralen Plateaus (8) des Filters (3) bildet; und wobei die Stützen des ringförmigen Abschnitts (26) der laminaren Membran (5) in dem zentralen Plateau (8) und in der Folge von Vorsprüngen (19b) angeordnet sind.

4. Kapsel zum Aufbrühen eines Getränks nach Anspruch 3, **dadurch gekennzeichnet, dass** der abgestufte Boden (19c) des ringförmigen Tals (19) durch eine Folge von Vertiefungen gebildet wird, die durch radiale Trennwände voneinander getrennt sind.

5. Kapsel zum Aufbrühen eines Getränks nach einem der vorhergehenden Ansprüche 3 oder **4, dadurch gekennzeichnet, dass**:
- das obere Labyrinth (11) des Filters (3) die Folge von Vorsprüngen (19b) umfasst, die auf einem Umfangsweg um das zentrale Plateau (8) herum verteilt sind; eine Folge von zusätzlichen Vorsprüngen (20) mit einem Umfangsweg, der einen größeren Durchmesser als der Umfangsweg der anderen Folge von Vorsprüngen (19b) aufweist; und einen durchgehenden Umfangsvorsprung (21) mit einem Umfangsweg, der größer als der Umfangsweg der zusätzlichen Vorsprünge (20) ist;
- das untere Labyrinth (12) des Filters (3) einen radialen Zwischenströmungsquerschnitt umfasst, der durch eine Folge von zinnenartigen Zwischenbarrieren (23) begrenzt ist, die Durchgänge mit plötzlichen Richtungsänderungen bilden; einen inneren Strömungsquerschnitt, der durch eine innere Barriere begrenzt ist, die durch Vorsprünge (24) gebildet ist, welche einem Umfangsweg folgen und ihrerseits eine zentrierte Kammer (25) umgeben, die im Auslassloch (13) des Bodens (2) der Becherstruktur (1) gegenüberliegt.

6. Kapsel zum Aufbrühen eines Getränks nach Anspruch 5, **dadurch gekennzeichnet, dass** das untere Labyrinth (12) einen äußeren Kanal (22) enthält, in den die Löcher (6), die das obere Labyrinth (11) und das untere Labyrinth (12) verbinden, münden; wobei die Löcher (6) zwischen den zusätzlichen Vorsprüngen (20) des oberen Labyrinths (11) angeordnet sind; und
wobei der äußere Kanal (22) ein ungehinderter Raum ist, der alle Verbindungslöcher (6) der beiden Labyrinthe (11, 12) miteinander verbindet.

7. Kapsel zum Aufbrühen eines Getränks nach einem der vorhergehenden Ansprüche 5 oder 6, **dadurch gekennzeichnet, dass** die zinnenartigen Zwischenbarrieren (23) des unteren Labyrinths (12) radiale Trennwände (23a) in Kombination mit gegenüberliegenden bogenförmigen Trennwänden (23b) umfassen, die einem Umfangsweg parallel zum Umfangsweg der Außenkante des Filters (3) folgen; wobei die bogenförmigen Trennwände (23b) mit einem ihrer Enden an Seiten der radialen Trennwände (23a) befestigt sind.

8. Kapsel zum Aufbrühen eines Getränks nach einem der vorhergehenden Ansprüche, **dadurch gekennzeichnet, dass** die laminare Membran (5) eine erste Aluminiumschicht und eine zweite Polyesterschicht umfasst, die an zwei ihrer Flächen integral miteinander verbunden sind; wobei der kontinuierliche Umfangsvorschnitt (5b) der laminaren Membran (5) in der zweiten Polyesterschicht mit einer Unterbrechung der gesamten Dicke derselben enthalten ist; und wobei die laminare Membran (5) an dem Filter (3) und der Becherstruktur mithilfe der ersten Aluminiumschicht befestigt ist.

9. Kapsel zum Aufbrühen eines Getränks nach einem der vorhergehenden Ansprüche, **dadurch gekennzeichnet, dass** sie ein Filterpapier (9) umfasst, das mit einem Teil einer inneren Seitenfläche (10) der Becherstruktur (1) verschweißt ist, wobei das Filterpapier (9) in Kontakt mit der laminaren Membran (5) steht.

## Revendications

1. Capsule pour infuser une boisson comprenant :
une structure de coupelle (1) comprenant une ouverture fermée au moyen d'un couvercle (16) ;
un filtre (3) reposant sur un fond (2) de la structure de coupelle (1) sous un gradin périmétral (7) de la structure de coupelle (1) ; dans laquelle ledit fond (2) comprend un trou de sortie (13) de la boisson ;
une membrane laminaire (5) séparant une chambre inférieure (14) d'une chambre supérieure (15) de la structure de coupelle (1) ; dans laquelle le filtre (3) est dans la chambre inférieure (14), et dans laquelle la chambre supérieure (15) est configurée pour loger une substance alimentaire (17) ;
dans laquelle la membrane laminaire (5) est fixée à la structure de coupelle (1) au moyen d'une première fixation étanche coïncidant avec une zone annulaire (5a) de la membrane annulaire (5) soudée au gradin périmétral (7) de la structure de coupelle (1) ; et dans laquelle le filtre (3) comprend un labyrinthe supérieur (11) et un labyrinthe inférieur (12) agencés en opposition et communiquant entre eux par des trous (6) à proximité du contour extérieur du filtre (3) ; dans laquelle le labyrinthe supérieur (11) est en contact avec la membrane laminaire (5) et le labyrinthe inférieur (12) est en contact avec le fond (2) de la structure de coupelle (1) ;
**caractérisée en ce que** :
la membrane laminaire (5) est fixée au filtre (3) au moyen d'une deuxième fixation étanche centrale coïncidant avec une première partie interne (5c) de la membrane laminaire (5) qui est soudée à une zone d'un plateau central (8) qui fait partie du filtre (3) ; dans laquelle la membrane laminaire (5) comprend une pré-coupe circonférentielle continue (5b) qui a un diamètre supérieur à la dimension du contour du plateau central (8) du filtre (3) ;
la pré-coupe circonférentielle continue (5b) est positionnée dans une partie annulaire (26) de la membrane laminaire (5) faisant face à un creux annulaire (19) situé dans le labyrinthe supérieur (11) du filtre (3) et formant une trajectoire fermée afin de générer une ouverture annulaire continue autour du plateau central (8) ; dans laquelle le creux annulaire (19) a une envergure et ladite partie annulaire (26) est située dans l'envergure du creux annulaire (19) ; et dans laquelle ladite partie annulaire (26) repose sur deux zones collatérales parallèles sur des supports qui délimitent l'ouverture du creux annulaire (19) ;
dans laquelle une fois que la membrane laminaire (5) se casse le long de sa pré-coupe circonférentielle continue (5b), la boisson s'écoule en se dilatant dans le labyrinthe supérieur (11) à partir du creux annulaire (19) jusqu'aux trous (6) et en se concentrant dans le labyrinthe inférieur (12) vers le trou de sortie (13).

2. Capsule pour infuser une boisson selon la revendication 1, **caractérisée en ce que** la pré-coupe circonférentielle continue (5b) délimite la zone de la première partie interne (5c) de la membrane laminaire (5).

3. Capsule pour infuser une boisson selon l'une quelconque des revendications précédentes, **caractérisée en ce que** le creux annulaire (19) du filtre (3) est délimité par une face latérale continue (19a), des zones latérales d'une succession de saillies (19b) parallèles à la face latérale continue (19a) et à un fond étagé (19c) ; dans laquelle ladite face latérale continue (19a) fait partie du plateau central (8) du filtre (3) ; et dans laquelle les supports de la partie annulaire (26) de la membrane laminaire (5) sont positionnés dans le plateau central (8) et dans la succession de saillies (19b).

4. Capsule pour infuser une boisson selon la revendication 3, **caractérisée en ce que** le fond étagé (19c) du creux annulaire (19) est formé par une succession d'évidements séparés par des séparations radiales.

5. Capsule pour infuser une boisson selon l'une quelconque des revendications 3 ou 4, **caractérisée en ce que** :
le labyrinthe supérieur (11) du filtre (3) comprend la succession de saillies (19b) réparties dans une trajectoire circonférentielle autour du plateau central (8) ; une succession de saillies supplémentaires (20) avec une trajectoire circonférentielle ayant un plus grand diamètre que la trajectoire circonférentielle de l'autre succession de saillies (19b) ; et une saillie périmétrale continue (21) ayant une trajectoire circonférentielle supérieure à la trajectoire circonférentielle des saillies supplémentaires (20) ;
le labyrinthe inférieur (12) du filtre (3) comprend une section transversale d'écoulement radiale intermédiaire qui est délimitée par une succession de barrières crénelées intermédiaires (23) qui forment des passages avec des changements brusques de direction ; une section transversale d'écoulement intérieure qui est délimitée par une barrière interne formée par des saillies (24) qui suivent une trajectoire circonférentielle et qui entourent, à leur tour, une chambre centrée (25) faisant face au trou de sortie (13) du fond (2) de la structure de coupelle (1).

6. Capsule pour infuser une boisson selon la revendication 5, **caractérisée en ce que** le labyrinthe inférieur (12) comprend un canal extérieur (22), dans laquelle les trous (6) faisant communiquer le labyrinthe supérieur (11) et le labyrinthe inférieur (12) s'ouvrent ; dans laquelle lesdits trous (6) sont positionnés entre les saillies supplémentaires (20) du labyrinthe supérieur (11) ; et dans laquelle ledit canal extérieur (22) est dans un espace non obstrué raccordant tous les trous de communication (6) aux deux labyrinthes (11, 12).

7. Capsule pour infuser une boisson selon l'une quelconque des revendications 5 ou 6, **caractérisée en ce que** les barrières crénelées intermédiaires (23) du labyrinthe inférieur (12) comprennent des séparations radiales (23a) en combinaison avec des séparations arquées (23b) opposées qui suivent une trajectoire circonférentielle parallèle à la trajectoire circonférentielle du bord extérieur du filtre (3) ; dans laquelle lesdites séparations arquées (23b) sont fixées par l'une de leurs extrémités aux côtés des séparations radiales (23a).

8. Capsule pour infuser une boisson selon l'une quelconque des revendications précédentes, **caractérisée en ce que** la membrane laminaire (5) comprend une première couche d'aluminium et une deuxième couche de polyester fixées de manière solidaire ensemble par deux de leurs faces ; dans laquelle la pré-coupe circonférentielle continue (5b) de la membrane laminaire (5) est incluse dans la deuxième couche de polyester avec l'interruption de toute son épaisseur ; et dans laquelle la membrane laminaire (5) est fixée au filtre (3) et à la structure de coupelle au moyen de la première couche d'aluminium.

9. Capsule pour infuser une boisson selon l'une quelconque des revendications précédentes, **caractérisée en ce qu'**elle comprend un papier filtre (9) qui est soudée à une partie d'une face latérale interne (10) de la structure de coupelle (1) ; dans laquelle ledit papier filtre (9) est en contact avec la membrane laminaire (5).
